Europäisches Patentamt

European Patent Office

Office européen des brevets

(19)

(11) Veröffentlichungsnummer: **0 235 612 B1**

(12) **EUROPÄISCHE PATENTSCHRIFT**

(45) Veröffentlichungstag der Patentschrift: **15.05.91**

(51) Int. Cl.⁵: **A01F 25/20**

(21) Anmeldenummer: **87101635.8**

(22) Anmeldetag: **06.02.87**

(54) **Ausspeichereinrichtung für Silos.**

(30) Priorität: **28.02.86 DE 3606669**

(43) Veröffentlichungstag der Anmeldung:
**09.09.87 Patentblatt 87/37**

(45) Bekanntmachung des Hinweises auf die
Patenterteilung:
**15.05.91 Patentblatt 91/20**

(84) Benannte Vertragsstaaten:
**DE**

(56) Entgegenhaltungen:
**DE-A- 2 119 661**
**DE-A- 3 327 128**
**FR-A- 2 260 925**
**US-A- 2 649 215**

**PATENT ABSTRACTS OF JAPAN, Band 9, Nr.
34 (M-357)[1757], 14. Februar 1985; & JP-A-59
177 226 (KANEKO YOUSHIYOKU SANGYO
K.K.) 06-10-1984**

(73) Patentinhaber: **Schade Fördertechnik GmbH &
Co.
Am Rosenplätzchen 120
W-4600 Dortmund 1(DE)**

(72) Erfinder: **Fischer, Gerhard, Dipl.-Ing.
Friegstrasse 7
W-4600 Dortmund-Kirchhörde(DE)**
Erfinder: **Ströcker, Günter, Dipl.-Ing.
Natorper Str. 18
W-4757 Holzwickede Kr. Unna(DE)**

(74) Vertreter: **Vollbach, Hans, Dipl.-Ing. et al
Patentanwälte Dipl.-Ing. Buschhoff Dipl.Ing
Hennicke Dipl.-Ing. Vollbach Kaiser-
Wilhelm-Ring 24
W-5000 Köln 1(DE)**

## Beschreibung

Die Erfindung betrifft eine Einrichtung zum Ausspeichern von Schüttgut aus Silos, mit einer das Schüttgut auf der Oberfläche des Schüttguthaufens abtragenden, im Silo heb- und senkbaren Räumvorrichtung, die das Schüttgut einem sich durch das Silo nach unten erstreckenden Teleskop-Fallrohr zuführt, das mit der Räumvorrichtung so gekoppelt ist, daß es durch teleskopartiges Ein- und Ausschieben den Hubbewegungen der Räumvorrichtung folgt, wobei das Teleskop-Fallrohr mindestens ein unteres Schieberohr und ein gegenüber diesem hubbewegliches oberes Kupplungsrohr aufweist, das mit einem Schüttgut-Einlauf versehen und mit der Räumvorrichtung gekuppelt ist.

Bei Silos kleiner Speicherkapazität, die in der Landwirtschaft für die Aufnahme von Gärfutter dienen, ist es bekannt, als Abzugsschacht für das Speichergut ein zentral im Silo angeordnetes Teleskop-Fallrohr vorzusehen, dessen oberes Rohr einen um die Siloachse schwenkbaren Räumarm trägt und mit einem Einlauf für das vom Räumarm geförderte Speichergut versehen ist (DE-AS 12 50 360). Das obere Rohr bildet zugleich ein Kupplungsrohr, mit welchem das eingefahrene Teleskop-Fallrohr nebst Räumgerät mittels eines Windenseiles wieder im Silo hochgezogen wird. Das Kupplungsrohr besteht hierbei aus zwei über eine Drehverbindung verbundenen Rohrteilen, von denen das den seitlichen Schüttgut-Einlauf aufweisende obere Rohrteil sich mit dem Räumarm dreht.

Bei einer anderen bekannten Silo-Ausspeichereinrichtung, die für das Austragen von Eisstücken bestimmt ist, findet als Abzugsschacht ein Teleskop-Fallrohr Verwendung, welches sich mit seinen Rohren an einem feststehenden Standrohr führt (DE-PS 831 519). Auch hier handelt es sich um ein Klein-Silo.

Die bekannten Silos mit einem als Teleskop-Fallrohr ausgebildeten zentralen Abzugsschacht haben sich in der Praxis für Schüttgut-Silos größerer Speicherkapazitäten nicht einführen können. Ein schwerwiegendes Problem dieser Einrichtungen besteht darin, daß sich die Teleskopbewegungen des im Speichergut stehenden Teleskoprohres im Einsatz nicht sicher beherrschen lassen. Beim Absenken des Räumgeräts im Silo wird zwar der Einschub des Teleskop-Fallrohrs erzwungen. Es ist aber nicht zuverlässig erreichbar, daß sich das Teleskop-Fallrohr hierbei stufenweise Schuß um Schuß von unten nach oben einschiebt. Vielmehr kann es geschehen, daß Einzelrohre der Teleskopsäule oder sogar ganze Rohrgruppen derselben vorzeitig unkontrolliert einschieben, bevor die darunterliegenden Rohre eingeschoben sind. Dies führt dazu, daß die hängengebliebenen Rohre oder Rohrgruppen, sobald durch ihr Eigengewicht die Haftkraft zum umgebenden Speichergut überschritten wird, schlagartig bis zum Aufprall auf dem Flansch eines darunterliegenden Rohrschusses nach unten stürzen. Dieses unkontrollierte Abstürzen einzelner Rohre oder sogar ganzer Rohrgruppen führt bei den hohen Gewichten derselben zu sehr hohen Stoßbeanspruchungen und als Folge davon zu schweren Erschütterungen und ernsthaften Beschädigungen der Anlage. Reparaturen an dem im Speichergut stehenden Teleskop-Fallrohr sind außerordentlich umständlich und zeitraubend.

Es versteht sich, daß die vorgenannten Probleme sich in besonderem Maße dann stellen, wenn im Silo Schüttgüter gespeichert werden sollen, die, wie z.B. Gips, Düngesalze oder sonstige Salze und im Verhalten vergleichbare Speichergüter, zum Kleben, Verdichten oder sogar zum Verhärten neigen. Für die Speicherung solcher schwierigen Schüttgüter in Großsilos stehen bis heute keine unbedingt zuverlässigen Schüttgut-Ausspeichereinrichtungen zur Verfügung.

Die Erfindung greift auf die seit langem bekannten, in der Praxis aber für die Schüttgutspeicherung bisher nicht durchgesetzten Vorschläge zurück, als Abzugsschacht für das auszuspeichernde Schüttgut ein Teleskop-Fallrohr zu verwenden, das von oben her durch die im Silo arbeitende Räumvorrichtung mit dem Speichergut beschickt wird und das Füllgut durch den Siloboden nach unten abfördert. Aufgabe der Erfindung ist es vornehmlich, eine Silo-Ausspeichereinrichtung der genannten Art, die bevorzugt für das Ausspeichern der oben erwähnten schwierigen Schüttgüter aus Silos großer Speicherkapazität bestimmt ist, so auszubilden, daß ein schlagartiges Abstürzen einzelner Rohre oder Rohrgruppen des Teleskop-Fallrohrs und die hiermit verbundenen Gefahren für den Bestand der Anlage zuverlässig vermieden werden, dies vorteilhafterweise zugleich bei vereinfachter Ausgestaltung des Teleskop-Fallrohrs.

Die vorgenannte Aufgabe wird erfindungsgemäß dadurch gelöst, daß das Schieberohr des Teleskop-Fallrohres mittels eines Drehantriebs um seine Achse drehbar ist.

Die Erfindung geht demgemäß von einem Teleskop-Fallrohr aus, das mindestens ein in seiner Einschubfolge innerhalb der Teleskopsäule unbestimmtes und daher möglicherweise unkontrolliert einschiebendes Schieberohr aufweist, das zwischen dem mit der Räumvorrichtung gekoppelten, von dieser in beiden Hubrichtungen mitgenommenen Kupplungsrohr des Teleskop-Fallrohrs und dem Siloboden bzw. einem unter diesem über einem Abzugsförderer feststehend angeordneten Standrohr od. dgl. eingeschaltet ist. Nach der Erfindung ist dieses Schieberohr um seine Rohrachse drehbar, wodurch es gelingt, die Haftung zwischen diesem Rohr und dem umgebenden Schüttgut soweit zu lösen, daß das Schieberohr beim Einschub des Teleskop-Fallrohrs unter seinem Eigengewicht nach unten gleitet. Das gefährliche Hängenbleiben des Schieberohrs im Schüttguthaufen, das die Gefahr eines schlagartigen Durchrutschens dieses Rohres bei Überwindung der Haftung am Schüttgut in sich birgt, wird zuverlässig vermieden. Da bei einem Silo der hier in Rede stehenden Art dasjenige Schüttgut, das zuletzt eingespeichert wurde, als erstes wieder ausgespeichert wird, kann das im unteren Siloraum befindliche Schüttgut, das ohnehin durch das auflagernde Schüttgut stärker verdichtet wird, unter Umständen über längere Zeit hinweg im Silo verbleiben, ein Umstand, der in besonderem Maße zur Verdichtung und Verhärtung des Schüttguts führt. Es ist daher vor allem bei schwierigen Schüttgütern wesentlich, daß zumindest das oder die im unteren Siloraum befindlichen Schieberohre drehbar ist bzw. drehbar sind, um sie von dem umgebenden verhärteten Schüttgut losbrechen zu können. Das den Kopf des Teleskop-Fallrohrs bildende obere Kupplungsrohr braucht an sich nicht in Drehung versetzt zu werden, da es von der Räumvorrichtung, mit der es gekuppelt ist, bei den Hubbewegungen zwangsläufig mitgenommen wird. Es steht aber nichts im Wege, das Schieberohr mit dem darüber angeordneten Kupplungsrohr über eine Drehkupplung drehschlüssig zu kuppeln, so daß beide Rohre gemeinsam drehen. Diese Anordnung ist insbesondere dann vorteilhaft, wenn der Drehantrieb im Kopfbereich des Teleskop-Fallrohrs angeordnet wird und wenn hierbei insbesondere der Dreh- bzw. Schwenkantrieb des Räumgerätes zugleich den Drehantrieb für das oder die Schieberohre bildet. Das Kupplungsrohr kann hierbei mit einem von dem Drehantrieb angetriebenen Drehglied gekuppelt sein, welches Träger oder Bestandteil mindestens eines um die Siloachse drehbaren Räumgerätes, wie z.B. eines Räumarmes oder Räumrades, ist. Dabei lassen sich der Drehantrieb und das Drehglied an einem im Silo heb- und senkbaren Hubrahmen anordnen, der mit seinen Enden an Vertikalführungen der Silowand drehschlüssig geführt ist und über welchen die Reaktionskräfte der Ausspeichereinrichtung auf die Silowand abgesetzt werden. Der Hubrahmen ist hierbei zugleich Träger des Räumgerätes und des Teleskop-Fallrohrs, das mit seinem oberen Kupplungsrohr druck- und zugfest sowie zugleich drehschlüssig mit dem angetriebenen Drehglied des Räumgerätes gekuppelt ist.

Andererseits kann der Drehantrieb für das oder die Schieberohre auch unterhalb des Silobodens angeordnet sein. Dabei wird die Anordnung zweckmäßig so getroffen, daß das Schieberohr eine Bodenöffnung des Silobodens durchgreift, wobei der unterhalb dieser Bodenöffnung angeordnete Drehantrieb synchron mit dem Schieberohr heb- und senkbar ist. Der Drehantrieb besteht z.B. aus einem Reibradantrieb oder vorzugsweise einem Zahnantrieb. Hierbei trägt das Schieberohr einen Zahnkranz, mit dem ein vom Drehantrieb angetriebenes Ritzel im Eingriff steht. Der Drehantrieb wird zweckmäßig an einer Konsole gelagert, die über eine Drehverbindung mit dem Schieberohr verbunden ist. Das Gewicht des Drehantriebs erhöht das Eigengewicht des Schieberohrs und trägt daher dazu bei, ein Hängenbleiben des Schieberohrs im Schüttguthaufen zu vermeiden. Es besteht aber auch die Möglichkeit, das drehbare Schieberohr mittels mindestens einer Hubstütze, vorzugsweise eines Hubzylinders, der über eine Drehverbindung am Schieberohr angreift, abzustützen, wobei diese Hubstütze auch als einfacher Stoßdämpfer ausgebildet sein kann, der die Abwärtsbewegung des Schieberohrs bei Überwindung der Haftung zum umgebenden Schüttgut steuert bzw. dämpft, vorzugsweise aber vor allem dazu dient, bei der Aufwärtsbewegung der Räumvorrichtung sicherzustellen, daß das Kupplungsrohr erst dann aus dem Schieberohr ausfährt, wenn das Schieberohr seine obere Hubendlage erreicht hat.

Es versteht sich, daß das Teleskop-Fallrohr unterhalb seines Kopf- oder Kupplungsrohres auch mehrere Schieberohre als Rohrschüsse aufweisen kann. Dabei können auch alle Schieberohre über Drehkupplungen drehschlüssig gekuppelt sein, so daß sie entweder von dem oberen oder dem unteren Drehantrieb gemeinsam in Drehung versetzt werden. Bei unter dem Siloboden angeordnetem Drehantrieb kann der Antrieb nach Bedarf ein- und abgeschaltet werden, da dieser Antrieb vom Drehantrieb des Räumgerätes unabhängig ist. Erfolgt die Drehung des oder der Schieberohre von dem obenliegenden Drehantrieb des Räumgerätes her, so kann die Kupplung zwischen Kupplungsrohr und Drehglied als eine ein- und ausrückbare Drehkupplung ausgeführt werden.

Bei einer bevorzugten Ausführungsform der Erfindung weist das Teleskop-Fallrohr nur ein einziges Schieberohr auf, in das von oben das Kupplungsrohr als Tauchrohr einfaßt und das sich durch die Bodenöffnung hindurch bis unter den Siloboden erstreckt. Zweckmäßig wird dabei unterhalb des Silobodens zwischen dem durch den Siloboden durchtauchenden Schieberohr und einem Abzugsförderer ein feststehendes Standrohr angeordnet, das auch als Faltenbalg ausgebildet sein kann. Diese Ausgestaltungsform des Teleskop-Fallrohrs mit nur einem einzigen Schieberohr zeichnet sich durch besonders einfache und auch bei schwierigen Schüttgütern noch betriebssichere Bauweise aus.

Insbesondere bei solchen Schüttgütern, die zu stärkeren Verhärtungen neigen, lassen sich an der äußeren Mantelfläche des oder der Schieberohre auch kleine Löseorgane, z.B. kleine Zähne, Rippen oder Schneidleisten einschließlich schraubenförmig verlaufender Leisten od.dgl., vorsehen, die bei der Drehbewegung des Schieberohrs den Löseeffekt zu dem umgebenden Schüttgut erhöhen. Bei schraubenförmig angeordneten Leisten kann das anhaftende Schüttgut ähnlich einer Förderschnecke z.B. nach oben verdrängt werden, wodurch der Losbrecheffekt verbessert wird.

Die Erfindung wird nachfolgend im Zusammenhang mit den in der Zeichnung dargestellten Ausführungsbeispielen näher erläutert. In der Zeichnung zeigen:

Fig. 1
im Vertikalschnitt durch ein Schüttgut-Silo die in diesem angeordnete Ausspeichereinrichtung mit Teleskop-Fallrohr;

Fig. 2, 4 und 5
jeweils geänderte Ausführungsformen des Teleskop-Fallrohrs im Vertikalschnitt;

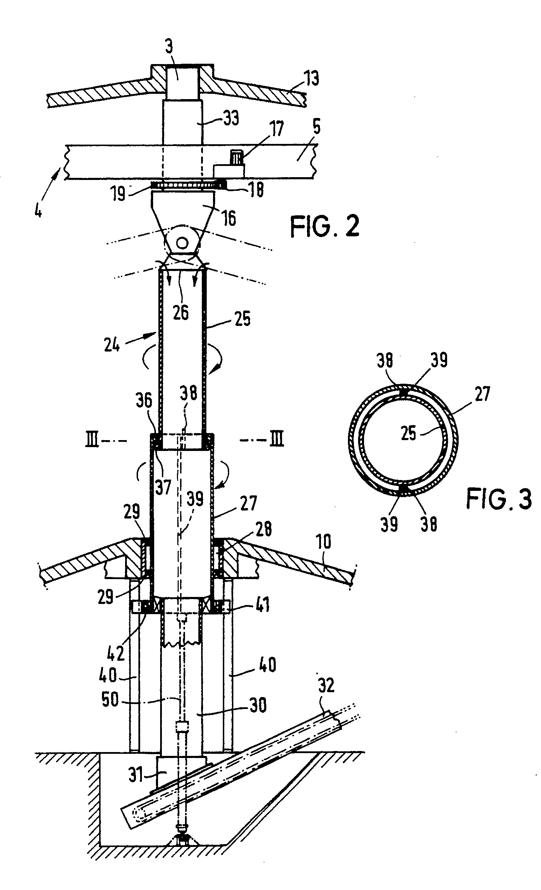

Fig. 3
einen Querschnitt nach Linie III-III der Fig. 2;

Fig. 6
ebenfalls im Vertikalschnitt ein Teleskop-Fallrohr mit unter dem Siloboden angeordnetem Drehantrieb.

In der Zeichnung ist mit 1 ein rundes Silo bezeichnet, welches als Großsilo für die Speicherung von Schüttgütern unterschiedlicher Art, insbesondere solchen Schüttgütern bestimmt ist, die, wie vor allem Gips, Düngesalze oder sonstige Salze zum Verdichten, Kleben oder sogar Aushärten neigen. Zur Beschickung des Silos 1 mit dem einzuspeichernden Schüttgut ist im oberen Bereich des Silos eine nicht näher dargestellte Beschickungsvorrichtung 2 angeordnet, die z.B. einen Einspeicherförderer aufweist, der das einzuspeichernde Schüttgut bei 3 zentral in das Silo 1 abwirft.

Die im Silo heb- und senkbare Räumvorrichtung 4 besteht in ihren Hauptteilen aus einem Hubrahmen 5, der als sich quer durch das Silo erstreckender Brückenträger oder als ein in Draufsicht etwa kreuz- oder sternförmiger Träger ausgebildet ist, welcher an seinen Enden in Gelenken 6 angeschlossene Gleitschuhe 7 trägt, mit denen sich die gesamte Räumvorrichtung an Vertikalführungen 8 der zylindrischen Silowand drehschlüssig abstützt und führt. Am Hubrahmen 5 ist ein Hubwerk 9 angeordnet, mit welchem die gesamte Räumvorrichtung 4 im Silo 1 zum Siloboden 10 hin abgesenkt und aus der Tieflage wieder in die dargestellte Hochlage gehoben werden kann. Das Hubwerk 9 besteht zweckmäßig aus mindestens einer Seilwinde, dessen Windenseile 11 über Umlenkrollen 12 an der Decke 13 des Silos und Umlenkrollen 14 des Hubrahmens 5 geführt sind.

An der Unterseite des Hubrahmens 5 ist mittig über eine Drehverbindung bzw. einen Drehkranz 15 ein Drehglied 16 gelagert. Der Drehantrieb 17 befindet sich am Hubrahmen 5; er weist ein angetriebenes Ritzel 18 auf, das im Zahneingriff steht mit einem Zahnkranz 19 des Drehgliedes 16, das somit um die Vertikalachse des Silos 1 drehbar ist. Am Drehglied 16 ist das auf der Oberfläche des Schüttguthaufens 20 arbeitende Räumgerät gelagert, welches bei dem bevorzugten Ausführungsbeispiel aus zwei Räumarmen 21 in Gestalt von Kratzern besteht, die an ihren innenliegenden Enden in (nicht dargestellten) Gelenken begrenzt höhenverschwenkbar am Drehglied 16 gelagert sind, wobei die Höheneinstellung z.B. mittels eines Windenseiles 22 bewerkstelligt werden kann. Mit 23 ist einer der beiden Antriebe der Räumarme 21 bezeichnet. Der Kratzerkettenantrieb des anderen Räumarmes befindet sich verdeckt hinter dem Antrieb 23.

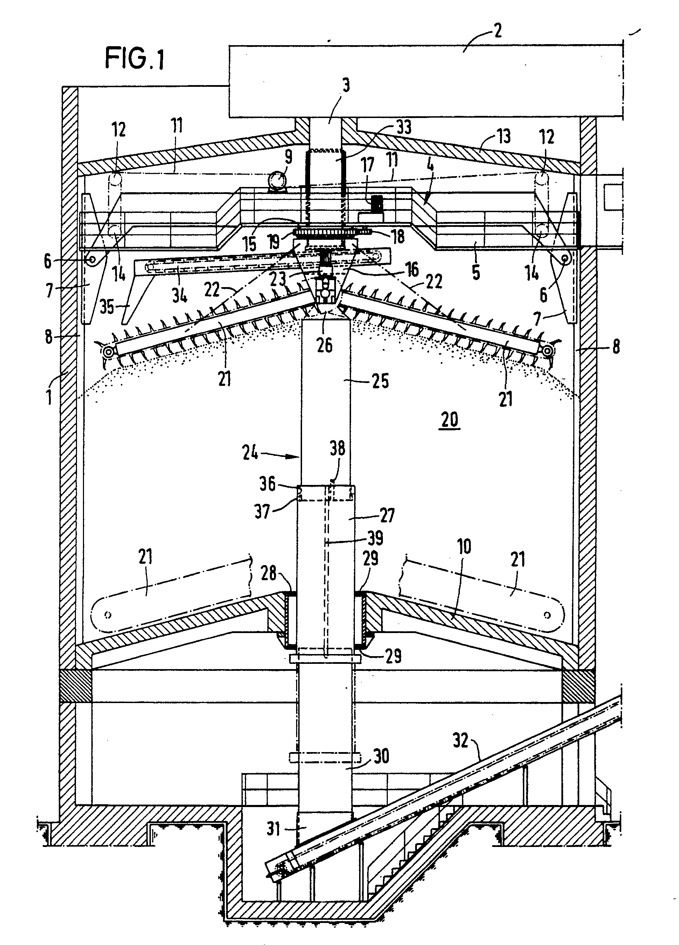

An dem Drehglied 16 ist ferner ein in der vertikalen Mittelachse des Silos 1 stehendes Teleskop-Fallrohr 24 mit seinem oberen Ende angeschlossen, so daß es von dem Hubrahmen 5 bei den Hubbewegungen in Auf- und Abwärtsrichtung mitgenommen wird bzw. den Hubbewegungen durch teleskopartiges Ein- und Ausschieben zu folgen vermag. Bei dem dargestellten bevorzugten Ausführungsbeispiel der Erfindung ist das Teleskop-Fallrohr 24 dreiteilig ausgebildet. Es besteht hierbei aus einem oberen Kupplungsrohr 25, das an seinem oberen Ende mit dem Drehglied 16 druck- und zugfest verbunden ist und außerdem an seinem oberen offenen Ende den Schüttgut-Einlauf 26 bildet, ferner einem sich nach unten an das Rohr 25 anschließenden Schieberohr 27, das eine zentrale Bodenöffnung 28 am Siloboden 10 durchfaßt, dabei zweckmäßig in der Bodenöffnung 28 geführt und mittels umlaufender Dichtungen 29 abgedichtet ist, sowie schließlich einem unterhalb des Silobodens 10 feststehend angeordneten Standrohr 30, das mit seinem unteren Austragsende 31 über einem aufsteigenden Abzugsförderer 32 liegt, der z.B. von einem Kettenkratzförderer gebildet ist. Das Kupplungsrohr 25 ist als Tauchrohr in das im Durchmesser größere Schieberohr 27 einschiebbar. Bei dem Ausführungsbeispiel nach Fig. 1 weist das Schieberohr 27 den größten Durchmesser und das Standrohr 30 den kleinsten Durchmesser auf, so daß sich auch das Standrohr 30 in das Schieberohr 27 hineinschiebt und außerdem das Kupplungsrohr 25 in das untere Standrohr 30 einschieben kann. In Fig. 1 ist die untere Stellung des Schieberohrs 27 strichpunktiert angedeutet. In dieser Stellung befinden sich die Räumarme 21 in der ebenfalls strichpunktiert angedeuteten unteren Arbeitsposition am Siloboden 10, der von der Bodenöffnung 28 nach außen geneigt ist, um bei ausreichender Freihöhe unter dem Siloboden ein möglichst großes Speichervolumen im Silo zu erhalten.

Das einzuspeichernde Schüttgut wird über die Beschickungsvorrichtung 2 von oben zentral in das Silo abgeworfen. Es fällt durch ein zwischen dem Hubraum 4 und der Abwurfstelle 3 angeordnetes, teleskopartiges Einspeicherrohr 33, welches aufgrund seiner Teleskopbewegungen den Hubbewegungen der Räumvorrichtung 4 zu folgen vermag und welches das Schüttgut einem Verteilerband 34 od.dgl. zuführt, das am Drehglied 16 angeordnet ist, sich mit dem Drehglied um die Siloachse dreht und dabei das zugeführte Schüttgut über eine Schurre 35 in das Silo abwirft. Mit Hilfe des Kratzerkettenbandes der Kratzer 21 läßt sich das zugeführte Schüttgut über den Siloquerschnitt verteilen.

Während des Ausspeicherbetriebs senkt sich die gesamte Räumvorrichtung 4 im silo 1 langsam nach unten ab, was mit Hilfe des Hubwerks 9 geschieht. Die Räumarme 21 drehen sich mit dem Drehglied 16 um die Siloachse; sie fördern das Schüttgut auf der Oberseite des Schüttguthaufens 20 nach innen und werfen es an ihren innenliegenden Enden in die obere Einlauföffnung 26 des Kupplungsrohres 25. Das Schüttgut fällt im Teleskop-Fallrohr 24 nach unten und kann hierbei über den ansteigenden Abzugsförderer 32 abgeführt werden.

Bei der Absenkbewegung der Räumvorrichtung 4 im Silo 1 muß verhindert werden, daß sich beim teleskopartigen Einfahren des Fallrohrs 24 ein Zustand einstellt, bei dem das Schieberohr 27 frei nach unten abstürzen kann, sobald sein Eigengewicht die Haltekraft, mit der das Schieberohr in dem umgebenden Speichergut gehalten wird, übersteigt. Ein solcher labiler Zustand des Schieberohrs 27 ergibt sich z.B. dann, wenn sich beim Ausspeichern das Kupplungsrohr 25 in das hochgefahrene Schieberohr 27 schiebt. Das Schieberohr 27 kann dann um das Maß, um welches sich das Kupplungsrohr 25 eingeschoben hat, nach unten fallen, wobei es mit seinem am oberen Ende angeordneten Innenflansch 36 gegen den am unteren Ende des Kupplungsrohrs 25 befestigten Außenflansch 37 stößt.

Um den vorgenannten instabilen Zustand des Schieberohrs 27 zu vermeiden, muß dafür gesorgt werden, daß bei der Absenkbewegung der Räumvorrichtung 4 aus ihrer in Fig. 1 gezeigten Hochlage zunächst beide Rohre 25 und 27 im ausgeschobenen Zustand sich gemeinsam absenken, bis das Schieberohr 27 die in Fig. 1 strichpunktiert angedeutete untere Hublage erreicht hat, wobei im weiteren Verlauf der Absenkbewegung der Räumvorrichtung 4 sich nun das Kupplungsrohr 25 in das abgesenkte Schieberohr 27 schiebt. Beim Hochfahren der Räumvorrichtung 4 im Silo 1 schiebt zunächst das Kupplungsrohr 25 aus dem Schieberohr 27 aus, bis es über den Anschlag der Flansche 36, 37 das Schieberohr mitnimmt. Bei dem in Fig. 1 dargestellten Ausführungsbeispiel ist das obere Kupplungsrohr 25 mit dem vom Drehantrieb 17 angetriebenen Drehglied 16 so gekuppelt, daß es an der Drehbewegung des Drehgliedes teilnimmt. Die Drehbewegung des Kupplungsrohrs 25 wird über eine Drehkupplung auf das untere Schieberohr 27 übertragen. Wie in Fig. 1 lediglich gestrichelt angedeutet ist, besteht die Drehkupplung aus an den Rohren 25, 27 fest angeordneten Anschlagleisten 38 und 39. Die Anschlagleisten 38 sind an der Außenwand des Kupplungsrohrs 25 befestigt und erstrecken sich nur über den unteren Endbereich dieses Rohres. Die anderen Anschlagleisten 39 sind an der Innenwand des Schieberohrs 27 fest angeordnet; sie erstrecken sich im wesentlichen über die gesamte Länge des Schieberohrs. Auf diese Weise sind die beiden Rohre 25 und 27 axial gegeneinander verschiebbar, aber drehschlüssig miteinander gekuppelt, so daß das Schieberohr 27 von dem mit Hilfe des Drehantriebs 17 über das Drehglied 16 angetriebenen Kupplungsrohr 25 mitgenommen wird. Das Schieberohr 27 dreht sich dabei im unteren Bereich des Silos, wo das Schüttgut im allgemeinen besonders stark verdichtet ist. Die Drehbewegung führt zu einem Losbrechen des Schieberohrs 27 von dem umgebenden Schüttgut und stellt damit sicher, daß bei der Abwärtsbewegung der Räumvorrichtung 5 aus der Hochlage die Haftkraft des Schieberohrs 27 gegenüber dem Schüttgut so gering ist, daß sie von dem Eigengewicht des Schieberohrs 27 überwunden wird.

Wie Fig. 3 zeigt, kann die vorgenannte Drehkupplung zwischen den beiden Rohren 25 und 27 in einfacher Weise so ausgeführt werden, daß jeweils zwei Anschlagleisten 38 und 39 auf diametral gegenüberliegenden Seiten der Rohre 25, 27 vorgesehen werden. Gemäß Fig. 2 kann das Schieberohr 27 an seinem unter dem Siloboden 10 liegenden Ende auch in Hubrichtung geführt werden. Zu diesem Zweck sind unter dem Siloboden 10 mehrere über den Umfang des Schieberohrs 27 verteilt angeordnete vertikale Führungsschienen 40 vorgesehen, an denen sich ein ringförmiger Führungsschuh 41 od.dgl. drehschlüssig führt, der über eine Drehverbindung 42 mit dem unteren Endes des Schieberohrs 27 verbunden ist.

Bei den Ausführungsformen nach den Fig. 1 und 2 ist das Standrohr 30 im Durchmesser so bemessen, daß es sich in das Schieberohr 27 einschiebt, welches von sämtlichen drei Rohren den größten Durchmesser hat. Das Standrohr 30 hat den kleinsten Rohrdurchmesser und kann daher auch in das Kupplungsrohr 25 mit dem mittleren Durchmesser einschieben.

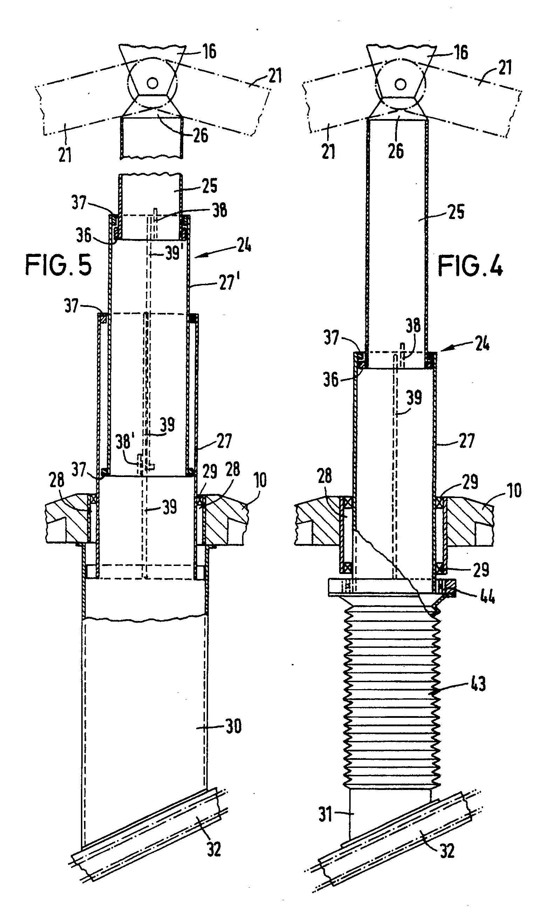

Bei der Ausführungsform nach Fig. 4 ist das Standrohr 30 als Faltenbalg 43 ausgebildet, der mit seinem unteren Ende am Anschlußstück 31 und mit seinem oberen Ende über eine Drehverbindung 44 am unteren Ende des Schieberohrs 27 angeschlossen ist und dadurch den Hubbewegungen des Schieberohrs zu folgen vermag.

Fig. 5 zeigt ein Standrohr 30, welches zwischen dem Abzugsförderer 32 und dem Siloboden 10 feststehend angeordnet ist und einen Durchmesser aufweist, der größer ist als der Durchmesser des Schieberohrs 27, so daß dieses von oben in das Standrohr eintauchen kann.

Aus Fig. 5 ist ferner zu erkennen, daß das Teleskop-Fallrohr 24 auch mehrere Schieberohre aufweisen kann, im dargestellten Beispiel zwei Schieberohre 27 und 27', wobei das obere Schieberohr 27' zwischen dem unteren Schieberohr 27 und dem Kupplungsrohr 25 angeordnet ist. Die Schieberohre 27 und 27' sind über jeweils eine Drehkupplung der genannten Art miteinander und mit dem oberen Kupplungsrohr 25 drehschlüssig gekuppelt, so daß sämtliche Schieberohre 27 und 27' über das Kupplungsrohr 25 und das Drehglied 16 vom Drehantrieb 17 angetrieben werden. Das obere Schieberohr 27' ist an seiner Innenwand mit axialen Anschlagleisten 39' versehen, die mit den Anschlagleisten 38 des Kupplungsrohrs 35 zusammenwirken. Außerdem weist das Schieberohr 27' im unteren Bereich außenseitig den Anschlagleisten 38 entsprechende kurze Anschlagleisten 40 auf, die mit den an der Innenwand des unteren Schieberohrs 27 befestigten Anschlagleisten 39 im Sinne einer Drehmomentenkupplung zusammenwirken.

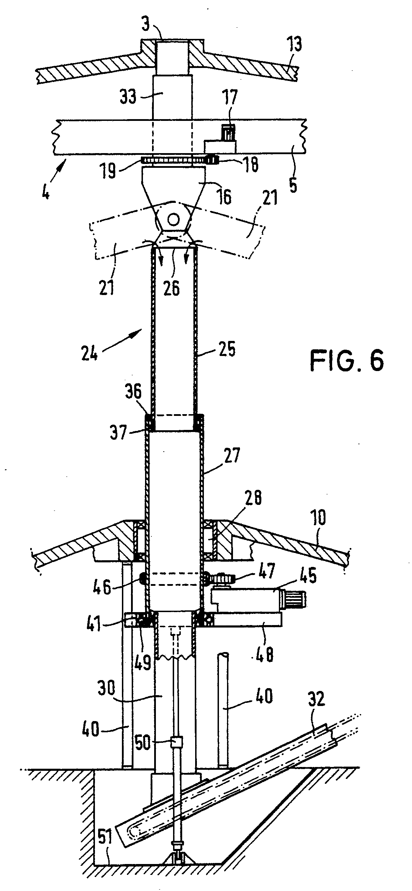

Fig. 6 zeigt eine Ausführungsform, bei der der Drehantrieb 45 für das Schieberohr 27 unter dem Siloboden 10 angeordnet ist. Das Schieberohr 27 trägt hierbei an seiner Außenseite einen Zahnkranz 46, mit dem ein vom Drehantrieb 45 angetriebenes Ritzel 47 im Zahneingriff steht. Der Drehantrieb 45 steht auf einer Konsole 48, die über eine Drehverbindung 49 mit dem unteren Ende des Schieberohrs 27 verbunden ist, so daß der Drehantrieb 45 an den Hubbewegungen des Schieberohrs 27 teilnimmt. Die Konsole 48 führt sich an den Führungssäulen 40, wodurch zugleich eine drehschlüssige Verbindung der Konsole 48 erreicht wird. Über den untenliegenden Drehantrieb 45 kann somit das Schieberohr 27 unabhängig von dem Drehantrieb 17 des Räumgerätes in Drehung versetzt werden. Falls das Teleskop-Fallrohr 24 mehrere Schieberohre 27, z.B. zwei Schieberohre 27, 27' gemäß Fig. 5, aufweist, können sämtliche Schieberohre 27 von dem unter dem Siloboden 10 angeordneten Drehantrieb 45 angetrieben werden, wobei die einzelnen Schieberohre über die oben beschriebenen Drehmomentenkupplungen drehschlüssig miteinander gekoppelt werden. Bei mehreren Schieberohren innerhalb der Teleskopsäule ist es auch möglich, einen Teil der Schieberohre über den oberen Drehantrieb 17 des Räumgerätes durch drehschlüssige Kupplung mit dem Kupplungsrohr 25 und einen anderen Teil der Schieberohre 27 über den unteren Drehantrieb 45 anzutreiben.

Wie Fig. 6 zeigt, kann das Schieberohr 27 unterhalb des Silobodens 10 auch durch eine oder mehrere Hubstützen 50 abgefangen werden, die sich auf dem Unterboden 51 abstützen. Für die Hubstützen 50 werden zweckmäßig druckmittelbeaufschlagte Hubzylinder verwendet, obwohl auch Stellgeräte mit angetriebenen Spindeln od.dgl. vorgesehen werden können. Die Hubstützen 50 fangen das durch den Drehantrieb 45 erhöhte Gewicht des Schieberohrs 27 ab. Sie können statt dessen oder auch gleichzeitig dazu dienen, bei der Aufwärtsbewegung der Räumvorrichtung 4 aus ihrer Tieflage das Schieberohr 27 mit dem eingefahrenen Kupplungsrohr 25 synchron zur Hubbewegung der Räumvorrichtung hochzufahren. Damit ist auch bei der Aufwärtsbewegung der Räumvorrichtung im Silo 1 eine Steuerung der Ausschubfolge der einzelnen Rohre des Teleskop-Fallrohrs 24 möglich, wobei zugleich verhindert wird, daß das Schieberohr 27 durch den Anschlag der Flansche 36, 37 von der Räumvorrichtung über das Kupplungsrohr 25 hochgezogen werden muß. Die Hubstützen 50 lassen sich auch dann vorsehen, wenn auf den untenliegenden Drehantrieb 45 zugunsten des obenliegenden Drehantriebs 17 verzichtet wird. In diesem Fall können die Hubzylinder 50 gemäß Fig. 2 unter den ringförmigen Führungsschuh 41 gestellt werden.

## Ansprüche

1. Einrichtung zum Ausspeichern von Schüttgut aus Silos, mit einer das Schüttgut auf der Oberfläche des Schüttguthaufens abtragenden, im Silo heb- und senkbaren Räumvorrichtung, die das Schüttgut einem sich durch das Silo nach unten erstreckenden Teleskop-Fallrohr zuführt, das mit der Räumvorrichtung so gekoppelt ist, daß es durch teleskopartiges Ein- und Ausschieben den Hubbewegungen der Räumvorrichtung folgt, wobei das Teleskop-Fallrohr mindestens ein unteres Schieberohr und ein gegenüber diesem hubbewegliches oberes Kupplungsrohr aufweist, das mit einem Schüttgut-Einlauf versehen und mit der Räumvorrichtung gekuppelt ist, **dadurch gekennzeichnet**, daß das Schieberohr (27, 27') des Teleskop-Fallrohres (24) mittels eines Drehantriebs (17, 45) um seine Achse drehbar ist.

2. Einrichtung nach Anspruch 1, **dadurch gekennzeichnet**, daß das Schieberohr (27, 27') mit dem darüber angeordneten Kupplungsrohr (25) über eine Drehkupplung (37, 38; 38, 39′) drehschlüssig gekuppelt ist.

3. Einrichtung nach Anspruch 2, **dadurch gekennzeichnet**, daß der Drehantrieb (17) im Kopfbereich des Teleskop-Fallrohrs (24) angeordnet ist und daß das Kupplungsrohr (25) mit einem von dem Drehantrieb (17) angetriebenen Drehglied (16) gekuppelt ist.

4. Einrichtung nach Anspruch 3, **dadurch gekennzeichnet**, daß das Drehglied (16) Träger oder Bestandteil mindestens eines um die Siloachse drehbaren Räumgerätes, wie insbesondere eines Räumarmes (21) oder eines Räumrades od.dgl., ist.

5. Einrichtung nach Anspruch 3 oder 4, **dadurch gekennzeichnet**, daß der Drehantrieb (17) und das Drehglied (16) an einem im Silo (1) heb- und senkbaren Hubrahmen (5) angeordnet sind, der mit seinen Enden an Vertikalführungen (8) der Silowand drehschlüssig geführt ist.

6. Einrichtung nach Anspruch 1 oder 2, **dadurch gekennzeichnet**, daß der Drehantrieb (45) unterhalb des Silobodens (10) angeordnet ist.

7. Einrichtung nach Anspruch 6, **dadurch gekennzeichnet**, daß das Schieberohr (27) eine Bodenöffnung (28) des Silobodens (10) durchgreift und daß der Drehantrieb (45) synchron mit dem Schieberohr (27) heb- und senkbar ist.

8. Einrichtung nach Anspruch 7, **dadurch gekennzeichnet**, daß das Schieberohr (27) einen Zahnkranz (46) trägt, mit dem ein vom Drehantrieb (45) angetriebenes Ritzel (47) im Eingriff steht, daß der Drehantrieb (45) an einer Konsole (48) gelagert ist, die über eine Drehverbindung (49) mit dem Schieberohr (27) verbunden ist, und daß das Schieberohr (27) unterhalb des Silobodens (10) von einer, vorzugsweise von Führungssäulen (40) gebildeten, Vertikalführung über die Drehverbindung geführt ist.

9. Einrichtung nach einem oder mehreren der Ansprüche 1 bis 8, **dadurch gekennzeichnet**, daß das drehbare Schieberohr (27) durch mindestens eine Hubstütze (50), vorzugsweise mindestens einen Hubzylinder, der über eine Drehverbindung (49) am Schieberohr angreift, abgestützt ist.

10. Einrichtung nach einem der Ansprüche 1 bis 9, **dadurch gekennzeichnet**, daß bei mehreren Schieberohren (27, 27′) diese über Drehkupplungen drehschlüssig gekuppelt sind.

11. Einrichtung nach einem der Ansprüche 2 bis 10, **dadurch gekennzeichnet**, daß die Drehkupplung aus an der Innenwand des äußeren Rohrs und der Außenwand des inneren Rohrs befestigten axialen Anschlagleisten (38, 39; 39, 40) besteht.

## Claims

1. Apparatus for reclaiming bulk material from storage bins or silos, with a clearing device which is adapted to be lifted and lowered in the silo, which removes bulk material from the surface of the pile of bulk material, and which feeds the bulk material to a telescopic down tube which extends downwardly through the silo and which is so coupled to the clearing device that it follows the lifting and lowering movements of the clearing device by sliding in and out telescopically, the telescopic down tube comprising at least one lower slide tube and an upper coupling tube which is adapted to be lifted and lowered relatively thereto, and which is coupled to the clearing device, characterised in that the slide tube (27, 27') of the telescopic down tube (24) is rotatable about its axis by means of a rotary drive (17, 45).

2. Apparatus according to claim 1, characterised in that the slide tube (27, 27') is coupled in rotationally locked manner via a rotary coupling (37, 38; 38, 39') to the coupling tube (25) situated above it.

3. Apparatus according to claim 2, characterised in that the rotary drive (17) is arranged in the head region of the telescopic down tube (24) and that the coupling tube (25) is coupled to a rotary element (16) driven by the rotary drive (17)

4. Apparatus according to claim 3, characterised in that the rotary element (16) is a support of or component of at least one clearing machine rotatable about the silo axis, such as especially a clearing machine of the arm type (21), wheel type or the like.

5. Apparatus according to claim 3 or 4, characterised in that the rotary drive (17) and the rotary element (16) are arranged on a vertically movable frame (5) adapted to be lifted and lowered in the silo (1), said frame being guided with its ends in rotationally locked manner on vertical guides (8) of the silo wall.

6. Apparatus according to claim 1 or 2, characterised in that the rotary drive (45) is arranged below the bottom (10) of the silo.

7. Apparatus according to claim 6, characterised in that the slide tube (27) extends through an aperture (28) in the silo bottom (10), and that the rotary drive (45) is liftable and lowerable synchronously with the slide tube (27).

8. Apparatus according to claim 7, characterised in that the slide tube (27) is provided with a gear rim (46) with which a pinion (47) driven by the rotary drive (45) meshes, that the rotary drive (45) is mounted on a bracket (48) connected to the slide tube (27) by means of a rotary connection (49), and that the slide tube (27) is guided, below the silo bottom (10), by a vertical guide via the rotary connection, said vertical guide being formed preferably of guide columns (40).

9. Apparatus according to one or more of claims 1 to 8, characterised in that the rotatable slide tube (27) is supported by at least one support (50) capable of an out and back motion, preferably at least one actuator cylinder, which is attached to the slide tube via a rotary connection (49).

10. Apparatus according to one of claims 1 to 9, characterised in that when a plurality of slide tubes (27, 27') are provided these are coupled in rotationally locked manner by means of rotary couplings.

11. Apparatus according to one of claims 2 to 10, characterised in that the rotary coupling comprises axial abutment strips (38, 39; 39, 40) fixed on the inner wall of the outer tube and the outer wall of the inner tube.


**Revendications**

1. Dispositif pour décharger des produits en vrac de silos, comprenant un dispositif de déblayage pouvant être soulevé et abaissé dans le silo qui racle le produit en vrac sur la surface supérieure du tas formé par ce produit, dispositif de déblayage qui achemine le produit en vrac vers une gouttière télescopique s'étendant vers le bas dans le silo, qui est accouplée au dispositif de déblayage de manière à suivre le mouvement du dispositif de déblayage par des mouvements télescopiques de rentrée et de sortie, la gouttière télescopique comprenant au moins un tube coulissant inférieur et un tube d'accouplement supérieur pouvant se déplacer par rapport au premier, qui est muni d'une entrée pour le produit en vrac et qui est accouplé au dispositif de déblayage, caractérisé en ce que le tube coulissant (27, 27') de la gouttière télescopique (24) peut tourner autour de son axe grâce à un mécanisme d'entraînement en rotation (17, 45).

2. Dispositif selon la revendication 1, caractérisé en ce que le tube coulissant (27, 27') est accouplé de façon fixe en rotation au tube d'accouplement (25) disposé au-dessus par l'intermédiaire d'un joint tournant (37, 38; 38, 39').

3. Dispositif selon la revendication 2, caractérisé en ce que le mécanisme d'entraînement en rotation (17) est monté dans la région de tête de la gouttière télescopique (24) et en ce que le tube de raccordement (25) est accouplé avec un organe tournant (16) entraîné par le mécanisme d'entraînement en rotation (17).

4. Dispositif selon la revendication 3, caractérisé en ce que l'organe tournant (16) constitue un support ou un élément composant d'au moins un appareil de déblayage pouvant tourner autour de l'axe du silo, comme notamment un bras de déblayage (21), une roue de déblayage ou analogues.

5. Dispositif selon la revendication 3 ou 4, caractérisé en ce que le mécanisme d'entraînement en rotation (17) et l'organe tournant (16) sont montés sur un châssis mobile (5) pouvant se soulever et s'abaisser dans le silo (1), châssis qui est guidé par ses extrémités dans des guides verticaux (8) de la paroi du silo de manière à ne pas pouvoir tourner.

6. Dispositif selon la revendication 1 ou 2, caractérisé en ce que le mécanisme d'entraînement en rotation (45) est disposé au-dessous du fond (10) du silo.

7. Dispositif selon la revendication 6, caractérisé en ce que le tube coulissant (27) traverse une ouverture (28) du fond (10) du silo et le mécanisme d'entraînement en rotation (45) peut se soulever et s'abaisser en synchronisme avec le tube coulissant (27).

8. Dispositif selon la revendication 7, caractérisé en ce que le tube coulissant (27) comporte une couronne dentée (46) qui est en prise avec un pignon (47) entraîné par le mécanisme d'entraînement en rotation (45), le mécanisme d'entraînement en rotation (45) est monté sur une console (48) qui est reliée au tube coulissant (27) par un joint tournant (49), et le tube coulissant (27) est guidé au-dessous du fond (10) du silo par un dispositif de guidage vertical par l'intermédiaire du joint tournant, formé de préférence par des colonnes de guidage (40).

9. Dispositif selon l'une quelconque des revendications 1 à 8, caractérisé en ce que le tube coulissant rotatif (27) est supporté par au moins un étai réglable (50), et de préférence par au moins un vérin de levage qui coopère avec le tube coulissant par l'intermédiaire d'un joint tournant (49).

10. Dispositif selon l'une quelconque des revendications 1 à 9, caractérisé en ce que dans le cas où sont prévus plusieurs tubes coulissants (27, 27'), ceux-ci sont accouplés de façon fixe en rotation par des joints tournants.

11. Dispositif selon l'une quelconque des revendications 2 à 10, caractérisé en ce que le joint tournant est constitué par des baguettes de butée axiales (38, 39; 39, 40) fixées à la paroi interne du tube externe et à la paroi externe du tube interne.

FIG.1

FIG. 2

FIG. 3

FIG.5

FIG.4

FIG. 6